# EUROPÄISCHE PATENTSCHRIFT

(11) **EP 3 355 102 B1**
(45) Veröffentlichungstag und Bekanntmachung des Hinweises auf die Patenterteilung: **26.11.2025**
(21) Anmeldenummer: 17153559.4
(22) Anmeldetag: 27.01.2017
(51) Int. Cl.: G02C 13/00

(54) **COMPUTERIMPLEMENTIERTES VERFAHREN ZUR BESTIMMUNG VON ZENTRIERPARAMETERN**
COMPUTER-IMPLEMENTED METHOD FOR DETERMINING CENTRING PARAMETERS
PROCÉDÉ MIS EN UVRE PAR ORDINATEUR DESTINÉ À DÉTERMINER DES PARAMÈTRES DE CENTRAGE

(43) Veröffentlichungstag der Anmeldung: 01.08.2018
(73) Patentinhaber: Carl Zeiss Vision International GmbH, 73430 Aalen (DE); Carl Zeiss AG, 73447 Oberkochen (DE)
(72) Erfinder: NIEUWENHUIS, Claudia, 73457 Essingen (DE); SCHWARZ, Oliver, 73492 Rainau (DE)
(74) Vertreter: Patentanwälte Bregenzer und Reule Partnerschaftsgesellschaft mbB

(56) Entgegenhaltungen:
- DE-A1- 102009 004 383
- DE-A1- 102011 115 239
- FR-A1- 2 987 908
- JP-A- 2007 206 211
- US-A1- 2003 081 173
- US-A1- 2003 123 026
- US-A1- 2007 195 266

## Beschreibung

Die Erfindung betrifft ein computerimplementiertes Verfahren zur Bestimmung von Zentrierparametern zur Anpassung von Brillengläsern an eine vorgegebene Brillenfassung und an den Kopf eines Probanden gemäß Oberbegriff des Anspruchs 1.

Zentrierparameter werden benutzt, um Brillengläser korrekt in einer Brillenfassung anzuordnen bzw. zu zentrieren, so dass die Brillengläser in korrekter Position relativ zu den Augen der die Brille tragenden Person angeordnet sind. Dabei handelt es sich zum Teil um anatomische Parameter der betreffenden Person, wie beispielsweise den Pupillenabstand, zum Teil um rein fassungsspezifische Parameter wie die Fassungsscheibenbreite oder die Fassungsscheibenhöhe und zum Teil um Kombinationen aus anatomischen und fassungsspezifischen Parametern, wie beispielsweise den Hornhautscheitelabstand und die Durchblickshöhe. Einen Überblick über die gängigen Zentrierparameter gibt die DIN EN ISO 13666 vom Oktober 2013.

Bei bekannten Verfahren zur Bestimmung von Zentrierparametern werden unkalibrierte Bilder aufgenommen, wobei an der Brille bzw. Brillenfassung ein Messbügel befestigt werden muss. Dies ist umständlich und störend. Desweiteren ist aus der US 2003/0123026 A1 eine Vorrichtung bekannt, die aus gleichzeitig aufgenommenen kalibrierten Bildern automatisch Zentrierparameter berechnet. Aus der DE 10 2011 115 239 A1 ist ein Verfahren der eingangs genannten Art bekannt, bei dem Kantenverläufe zur Darstellung des Brillenglasrands herangezogen werden.

Es ist Aufgabe der Erfindung, ein computerimplementiertes Verfahren der eingangs genannten Art derart weiterzubilden, dass es einfacher durchzuführen ist.

Diese Aufgabe wird erfindungsgemäß durch ein computerimplementiertes Verfahren mit den Merkmalen des Anspruches 1 gelöst. Vorteilhafte Weiterbildungen der Erfindung sind Gegenstand der abhängigen Ansprüche.

Der Erfindung liegt der Gedanke zugrunde, ein vereinfachtes Modell für die in der Brillenfassung aufzunehmenden Brillengläser bereitzustellen, indem die Geometrie der Brillenfassung beschreibende Parameter und insbesondere die nasalen und/oder temporalen Fassungsränder beschreibende Paramater ermittelt werden und dass an diese Parameter das Modell für die Brillengläser angepasst wird.

Dabei werden kalibrierte Bilder bereitgestellt. Deren Kalibrierung umfasst die extrinsischen Eigenschaften der die Bilder aufnehmenden Kameras oder der die Bilder nacheinander aufnehmenden Kamera wie die relative Ausrichtung ihrer optischen Achsen sowie die relative Anordnung zueinander im Raum, sowie ihre intrinsischen Eigenschaften, also die Eigenschaften der Kameras selbst, die definieren, wie ein Punkt im Raum, der sich im internen Koordinatensystem der jeweiligen Kamera befindet, auf die Koordinaten der Pixel des aufgenommenen Bildes abgebildet wird. Eine ausführliche Beschreibung der Kalibrierung von Kameras findet sich im Lehrbuch "Multiple View Geometry in Computer Vision" von Richard Hartley und Andrew Zisserman, 2. Auflage, Cambridge University Press 2004, und dort insbesondere auf Seite 8.

Eine Weiterbildung des Verfahrens sieht vor, dass an die die nasalen und/oder temporalen Fassungsränder beschreibenden Parameter Ebenen als Näherung für die Flächen der in der Brillenfassung aufzunehmenden Brillengläser angepasst werden. Dies stellt eine Vereinfachung des Modells dar, die einfacher zu berechnen ist. Zweckmäßig werden die die nasalen und temporalen Fassungsränder beschreibenden Parameter mittels Epipolargeometrie und/oder mittels Triangulation ermittelt. Dabei wird bevorzugt, dass mindestens drei gleichzeitig aus unterschiedlichen Aufnahmerichtungen aufgenommene kalibrierte Bilder des Kopfes bereitgestellt werden, wobei ein Frontbild den Kopf von vorne abbildet und jeweils ein Seitenbild den Kopf von links und von rechts abbildet. Die Aufnahmerichtungen der Seitenbilder schließen mit der Aufnahmerichtung des Frontbilds zweckmäßig jeweils einen Winkel von mindestens 60 Grad, z.B. 90°±10° ein.

Gemäß der Erfindung ist vorgesehen, dass die die Position der Augen beschreibenden geometrischen Parameter die Position des Hornhautscheitels im Raum umfassen.

Gemäß der Erfindung wird die in einer ersten Näherung bestimmte Position des Hornhautscheitels im Raum einer Korrekturrechnung unterzogen. Die Art der Korrekturrechnung ist dann abhängig von der Art, wie die Position des Hornhautscheitels im Raum in der ersten Näherung bestimmt wird.

Erfindungsgemäß wird bei einer sogenannten pupillenbasierten Auswertung die Position des Hornhautscheitels im Raum in erster Näherung als Schnittpunkt eines die Hornhaut tangierenden Sichtstrahls einer das Seitenbild aufnehmenden Seitenkamera mit einem auf die Pupille gerichteten Sichtstrahl einer das Frontbild aufnehmenden Frontkamera bestimmt. Weiter wird erfindungsgemäß mittels der Korrekturrechnung die Position des Hornhautscheitels gemäß a = q + µ * v + µ * w berechnet, wobei a der Positionsvektor des Hornhautscheitels im Raum nach Durchführung der Korrekturrechnung, q die Position des Hornhautscheitels in erster Näherung, µ ein Erfahrungswert für den Abstand zwischen dem Pupillenzentrum und dem Hornhautscheitel, v ein Einheitsvektor der Raumrichtung vom Pupillenzentrum zur Frontkamera und w ein Einheitsvektor der durch das Zentrum der Hornhautkugel verlaufenden Aufnahmerichtung ist.

Alternativ hierzu ist es auch möglich, eine reflexbasierte Auswertung vorzunehmen, indem bei der Aufnahme der Bilder ein Lichtblitz vorzugsweise mittels einer LED erzeugt wird, wobei die Position des Hornhautscheitels im Raum in erster Näherung als die Position des Reflexpunkts des Lichtblitzes auf der Hornhaut bestimmt wird. Ausgehend von dieser ersten Näherung kann, wenn der Lichtblitz mittels einer mittig vor dem Gesicht des Probanden angeordneten Lichtquelle erzeugt wird, vorteilhaft mittels der Korrekturrechnung die Position des Hornhautscheitels in horizontaler Richtung ausgehend vom Reflexpunkt mittels Addition von Δx =+/ -r * sin (½ * (arccos z/a + arctan x/(z-v))) zur x-Koordinate berechnet werden, wobei r ein Erfahrungswert für den Hornhautradius, a der Abstand des optischen Zentrums einer das Frontbild aufnehmenden Frontkamera zum Reflexpunkt, x und z die x- und z-Koordinaten des Reflexpunkts in einem Koordinatensystem mit dem Nullpunkt im optischen Zentrum der Frontkamera, wobei die Aufnahmerichtung der Frontkamera der z-Richtung entspricht und die x-Richtung horizontal orthogonal zur z-Richtung steht und in z-Richtung betrachtet nach rechts weist, und v der Abstand der den Lichtblitz erzeugenden Lichtquelle vom optischen Zentrum der Frontkamera in z-Richtung ist. Ergänzend oder alternativ hierzu kann mittels der Korrekturrechnung vorteilhaft die Position des Hornhautscheitels in y-Richtung ausgehend vom Reflexpunkt mittels Addition von Δy =+/ -r * sin ½ * (arctan I/(d-v)) berechnet wird, wobei r ein Erfahrungswert für den Hornhautradius, d der Abstand des optischen Zentrums der Frontkamera zum Reflexpunkt, v der Abstand der den Lichtblitz erzeugenden Lichtquelle vom optischen Zentrum der Frontkamera in z-Richtung und I der Abstand der Lichtquelle vom optischen Zentrum der Frontkamera in y-Richtung ist, wobei die y-Richtung orthogonal zur x-Richtung und zur z-Richtung ist und im Raum nach oben weist.

Dabei ist das Pluszeichen in x-Richtung anzuwenden, wenn der Hornhautscheitel des aus der Sicht des Probanden linken Auges detektiert wird, das Minuszeichen ist für das aus der Sicht des Probanden rechte Auge anzuwenden. In y-Richtung ist das Pluszeichen anzuwenden, wenn die den Lichtblitz aussendende Lichtquelle auf einer niedrigeren Höhe positioniert ist als die Frontkamera, das Minuszeichen ist anzuwenden, wenn sie in einer größeren Höhe montiert ist.

Vorteilhaft wird die Pupille bzw. der Reflexpunkt mittels Merkmalsextraktion und/oder Merkmalsmatchings (Merkmalsvergleich) und/oder mittels maschinellen Lernens durch Vergleich mit einer Vielzahl vorbekannter Daten detektiert. Diesem Verfahrensschritt kann eine Gesichtsdetektion und/oder eine Detektion von Gesichtsmerkmalen wie den Augen als Vorverarbeitung vorausgehen, bei der detektiert wird, welche Bilddaten zum Gesicht des Probanden gehören, so dass nur diese Daten in die Detektion einfließen.

Um die Bestimmung des Hornhautscheitels im Raum für beide Augen vornehmen zu können, wird bevorzugt, dass mindestens ein gleichzeitig mit dem ersten und zweiten Bild seitlich bezüglich des Kopfes aufgenommenes, kalibriertes drittes Bild bereitgestellt wird.

Vorzugsweise wird das erfindungsgemäße computerimplementierte Verfahren mit einer Vorrichtung durchgeführt, wie sie grundsätzlich in Anspruch 15 und im Detail in der folgenden Figurenbeschreibung beschrieben wird.

Im Folgenden wird die Erfindung anhand eines in der Zeichnung schematisch dargestellten Ausführungsbeispiels näher erläutert. Es zeigen:

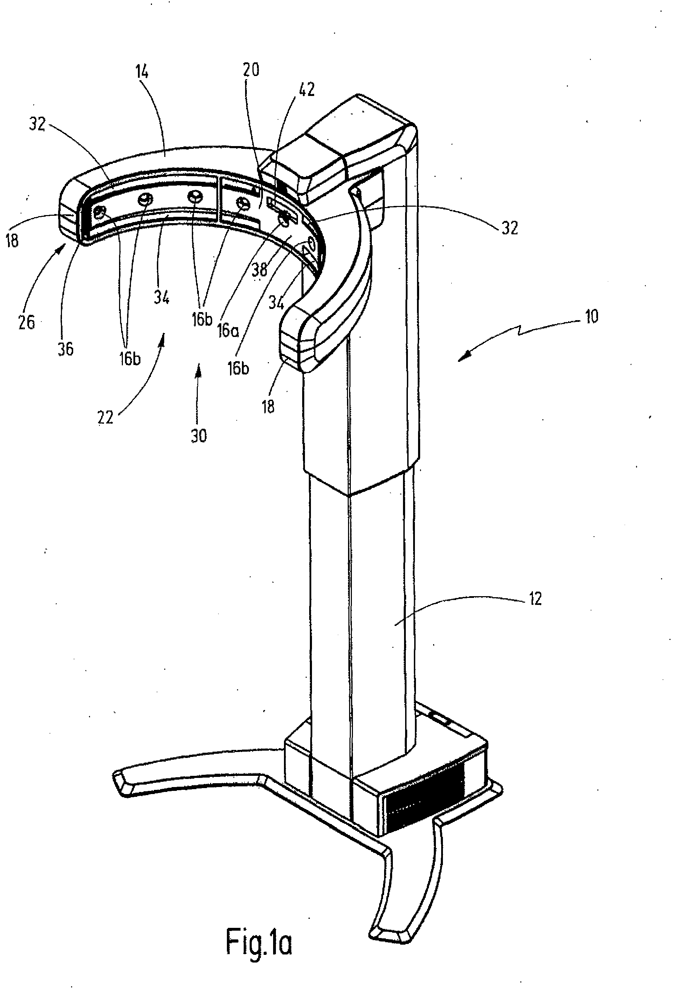

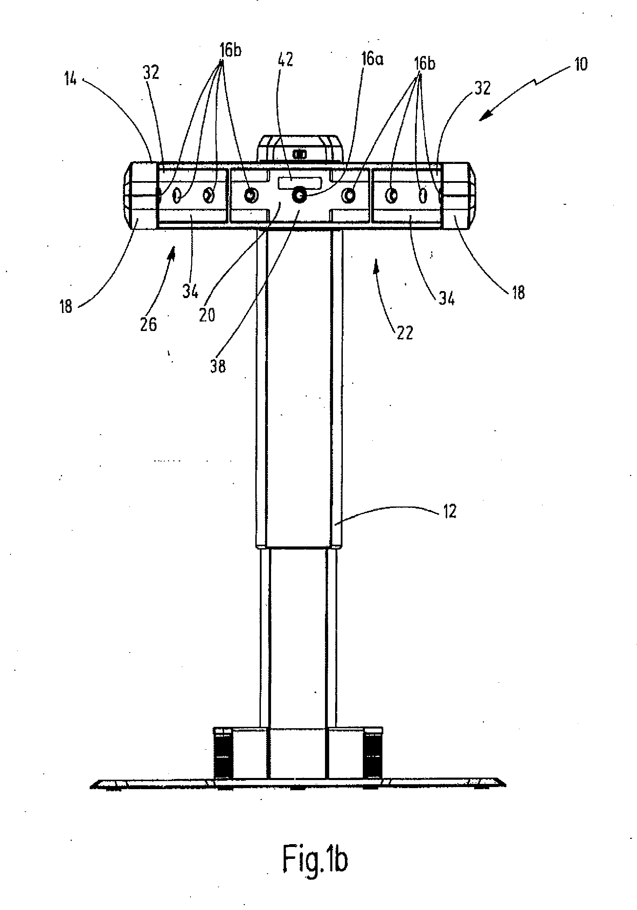

- Figur 1a, b: eine Vorrichtung zur Bestimmung von Zentrierparametern in perspektivischer Ansicht und in einer Ansicht von vorne;
- Figur 2: eine Veranschaulichung der Korrekturrechnung bei pupillenbasierter Bestimmung der Position des Hornhautscheitels;
- Figur 3a,b: eine Veranschaulichung der Korrekturrechnung bei reflexbasierter Bestimmung der Position des Hornhautscheitels;
- Figur 4a, b: Ansichten eines eine Brille tragendes Kopfes mit darauf projizierten genäherten Fassungskanten von vorne und von der Seite und
- Figur 5: eine schematische Darstellung von näherungsweise bestimmten Glasebenen.

Die in der Zeichnung dargestellte Vorrichtung 10 dient der Bestimmung von Zentrierparametern für die Brillenanpassung. Sie weist eine Säule 12 auf, die höhenverstellbar einen Kameraträger 14 trägt, welcher wiederum eine Anzahl Kameras 16a, 16b trägt. Der Kameraträger 14 ist in Draufsicht näherungsweise kreisförmig gebogen und erstreckt sich zwischen zwei freien Enden 18, welche im Abstand zueinander angeordnet sind. Nach vorne, also zur Säule 12 hin, und zu den Seiten umschließt eine Innenfläche 20 des Kameraträgers 14 einen Innenraum 22, in dem sich bei der Aufnahme von Bildern durch die Kameras 16a, 16b der Kopf eines Probanden befindet. Die Innenfläche 20 ist in einer Richtung, die zwischen den freien Enden 18 verläuft, konkav gebogen und weist beispielsweise die Form eines Abschnitts einer Zylindermantelfläche auf, wobei der Zylinder eine kreisrunde oder ovale Grundfläche haben kann. Um den Kameraträger 14 bezüglich des Kopfs des Probanden auf der richtigen Höhe positionieren zu können, ist in der Säule 12 eine nicht näher dargestellte Hubeinrichtung angeordnet, mit der der Kameraträger 14 motorisch angetrieben auf und ab bewegt werden kann.

Alle Kameras 16a, 16b sind in einer sich zwischen den freien Enden 18 erstreckenden Kameraanordnung 26 angeordnet. Im vorliegenden Ausführungsbeispiel ist die Kameraanordnung 26 als Kamerareihe 26 ausgebildet, deren Kameras 16a, 16b sich alle in derselben Höhe befinden, wobei ihre optischen Achsen auf den Innenraum 22 gerichtet sind. Im vorliegenden Ausführungsbeispiel umfasst die Kamerareihe 26 eine in der Mitte des Kameraträgers 14 angeordnete Frontkamera 16a, deren optische Achse frontal auf das Gesicht des Probanden gerichtet ist, sowie acht paarweise symmetrisch bezüglich einer durch die optische Achse der Frontkamera 16a verlaufenden senkrechten Symmetrieebene angeordnete Seitenkameras 16b von denen jeweils vier von links und von rechts auf das Gesicht des Probanden gerichtet sind. Die Kameras 16a, 16b sind zudem kalibriert, so dass sie gleichzeitig kalibrierte Bilder des Probanden aufnehmen können. Die Kalibrierung umfasst die extrinsischen Eigenschaften wie die relative Ausrichtung ihrer optischen Achsen sowie die relative Anordnung zueinander im Raum, sowie ihre intrinsischen Eigenschaften, also die Eigenschaften der Kameras selbst, die definieren, wie ein Punkt im Raum, der sich im internen Koordinatensystem der jeweiligen Kamera befindet, auf die Koordinaten der Pixel des aufgenommenen Bildes abgebildet wird.

Der Kameraträger 14 umschließt den Innenraum 22 nur nach vorne, zur Säule 12 hin, und zu den Seiten, also links und rechts des Kopfes des Probanden. Nach oben, unten sowie zu einer Rückseite 30 hin ist er offen, wobei die freien Enden 18 zueinander einen Abstand von mindestens 25cm aufweisen, so dass sich der Proband bequem von der Rückseite aus nähern kann. Im gezeigten Ausführungsbeispiel beträgt der Abstand 70 bis 80cm.

Zur Ausleuchtung des Innenraums 22 ist eine Beleuchtungseinrichtung mit einer oberhalb der Kamerareihe 26 verlaufenden oberen Lichtleiste 32 sowie einer unterhalb der Kamerareihe 26 verlaufenden unteren Lichtleiste 34 vorgesehen, welche jeweils eine Vielzahl von LEDs als Leuchtmittel aufweisen. Die obere Lichtleiste 32 und die untere Lichtleiste 34 erstrecken sich jeweils durchgehend oder mit Unterbrechungen über eine Länge, die mindestens so groß ist wie die Länge der in Umfangsrichtung zwischen den freien Enden 18 gemessenen Länge der Kamerareihe 26. Diese entspricht einem Umfangswinkel von mindestens 160 Grad. Nahe den freien Enden 18 sind die obere Lichtleiste 32 und die untere Lichtleiste 34 jeweils mittels einer vertikal verlaufenden weiteren Lichtleiste 36 miteinander verbunden. Die Kamerareihe 26 wird somit vollständig durch mindestens eine Reihe LEDs umrahmt. Die Vorrichtung 10 weist zudem eine in der Zeichnung nicht näher dargestellte Steuer- oder Regeleinrichtung auf, mit der die von den LEDs abgestrahlte Lichtintensität abhängig von der durch die Kameras 16a, 16b detektierten Lichtintensität gesteuert oder geregelt werden kann. Die LEDs der Lichtleisten 32, 34, 36 sind dabei zu Sektoren zusammengefasst, deren abgestrahlte Lichtintensitäten getrennt voneinander gesteuert bzw. geregelt werden können. Zudem ist vorgesehen, dass auch die von den einzelnen LEDs abgestrahlten Lichtintensitäten mittels der Steuer- oder Regeleinrichtung getrennt voneinander gesteuert oder geregelt werden können.

Um den Probanden richtig im Innenraum 22 positionieren zu können, sind die beiden der Frontkamera 16a nächstgelegenen Seitenkameras 16b dazu eingerichtet, den Abstand des Kopfs des Probanden von der Mitte 38 des Kameraträgers 14 zu messen. Mittels einer nicht näher dargestellten Anzeigeeinheit wird dem Probanden angezeigt, ob er richtig steht oder nicht. Die Anzeigeeinheit weist mehrere unterschiedlich eingefärbte Lichtquellen auf, die in einer Reihe angeordnet sind. Die mittlere Lichtquelle leuchtet grün, wenn der Proband richtig steht. Ausgehend von der mittleren Lichtquelle gibt es in jeder Richtung in dieser Reihenfolge eine gelbe, eine orangene und eine rote Lichtquelle, die entsprechend der Farbe anzeigt, wenn der Proband ein wenig, deutlich oder viel zu weit von der Mitte 38 des Kameraträgers 14 entfernt bzw. ein wenig, deutlich oder viel zu nah zur Mitte 38 steht. Um bei der Bestimmung der Zentrierparameter sicherzustellen, dass die Aufnahmerichtung des Probanden ins Unendliche gerichtet ist, ist eine am Kameraträger 14 angeordnete Fixationseinrichtung 42 vorgesehen, die ein Fixationsmuster für den Probanden in Form eines Specklemusters erzeugt. Das Fixationsmuster ist etwas höher angeordnet als die Frontkamera 16a, so dass der Proband über diese hinwegblickt. Damit kann sein Gesicht im größtmöglichen Umfang aufgenommen werden.

Die Vorrichtung 10 eignet sich insbesondere auch zur Herstellung eines Avatars des Kopfs des Probanden, welcher zur Bestimmung der Zentrierparameter herangezogen werden kann. Zum diesem Zweck werden durch die Kameras 16a, 16b kalibrierte Bilder des Kopfs des Probanden ohne Brille bzw. Brillenfassung aufgenommen. Mittels eines geeigneten Prozesses zur geometrischen Positionsbestimmung wie beispielsweise Triangulation wird ein Tiefenprofil des Kopfes erstellt, das diesen näherungsweise sehr gut abbildet. Der Kopf wird durch eine Vielzahl von Punkten abgebildet, die mittels eines Netzmusters miteinander verbunden werden können oder aber als Punktwolke gespeichert werden können. Bei der anschließenden Bestimmung der Zentrierparameter kann der so ermittelte Avatar herangezogen werden, um Zentrierparameter zu bestimmen, die aufgrund der geometrischen Eigenschaften der Brille bzw. Brillenfassung, die der Proband trägt, nicht oder nur näherungsweise bestimmt werden können. Beispielsweise kann ein breiter Fassungsbügel das Auge in einer Seitenaufnahme soweit verdecken, dass der Hornhautscheitelabstand nicht oder nur sehr ungenau bestimmt werden kann. Zudem können gefärbte oder stark spiegelnde Gläser die Augen nicht oder nur sehr schlecht erkennen lassen. Um dem zu begegnen, wird auf die von den Kameras 16a, 16b aufgenommenen Bilder des die Brille oder Brillenfassung tragenden Probanden das Tiefenprofil des Avatars projiziert und die Zentrierparameter, die aufgrund der durch die Brille bzw. Brillenfassung eingeschränkten Sicht nur ungenügend bestimmt werden können, werden mittels der Bilddaten des Avatars bestimmt. Dabei kann eine Anpassung des Avatars auf die Bilder des die Brille bzw. Brillenfassung tragenden Probanden zur Minimierung von Abweichungen erfolgen.

Die oben beschriebene Vorrichtung 10 kann wie folgt für eine pupillenbasierte Detektion eines Hornhautscheitels ebenso wie für eine reflexbasierte Detektion eines Hornhautscheitels bei beiden Augen des Probanden eingesetzt werden.

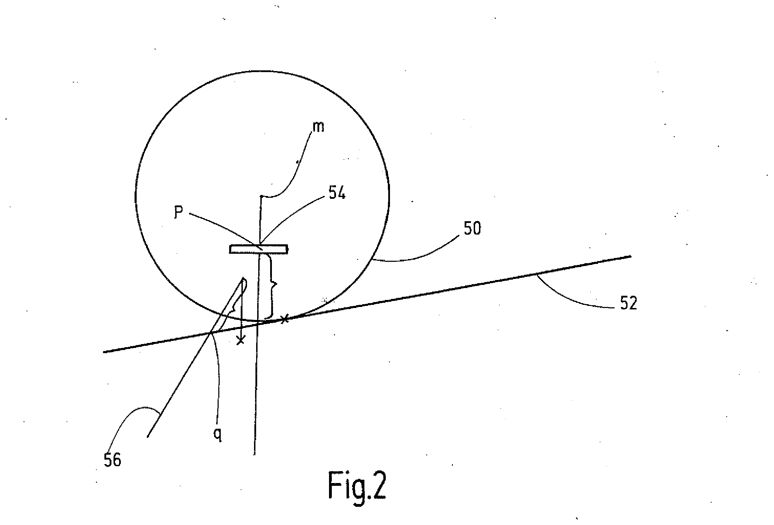

Bei der pupillenbasierten Methode gemäß Figur 2 wird zunächst die Position des Hornhautscheitels im Raum in erster Näherung als Schnittpunkt q eines die Hornhaut 50 tangierenden ersten Sichtstrahls 52 einer der ein Seitenbild des Probanden aufnehmenden Seitenkameras 16b mit einem auf die Pupille 54 gerichteten zweiten Sichtstrahl 56 der ein Frontbild des Probanden aufnehmenden Frontkamera 16a bestimmt. Mittels einer Korrekturrechnung wird eine korrigierte Position des Hornhautscheitels im Raum mittels der Gleichung a = q + µ * v + µ * w berechnet. Dabei ist µ ein Erfahrungswert für den Abstand zwischen dem Pupillenzentrum und dem Hornhautscheitel, der regelmäßig Werte zwischen 2,5mm und 4mm annimmt. v ist ein Einheitsvektor der Raumrichtung vom Pupillenzentrum p zur Frontkamera 16a, deren Koordinaten mit der Variable c1 angegeben werden, und errechnet sich als v = (p-c1) / | p - c1 |. w ist ein Einheitsvektor der durch das Zentrum m der Hornhautkugel verlaufenden Aufnahmerichtung, die auf das Fixationsmuster der Fixationseinrichtung 42 am Raumpunkt t gerichtet ist, und errechnet sich zu w = (t - m) /| t - m |. Alle Werte a, q, p, c1, t und m sind dreidimensionale Vektoren.

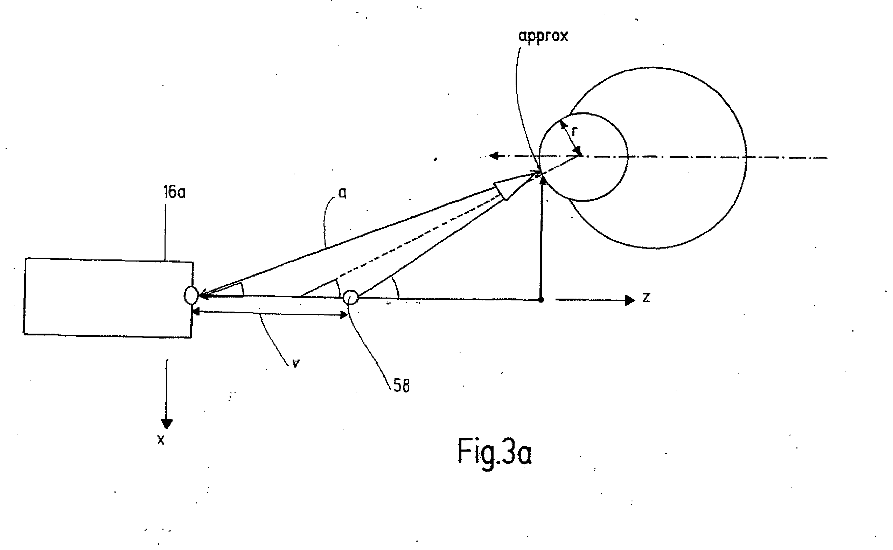

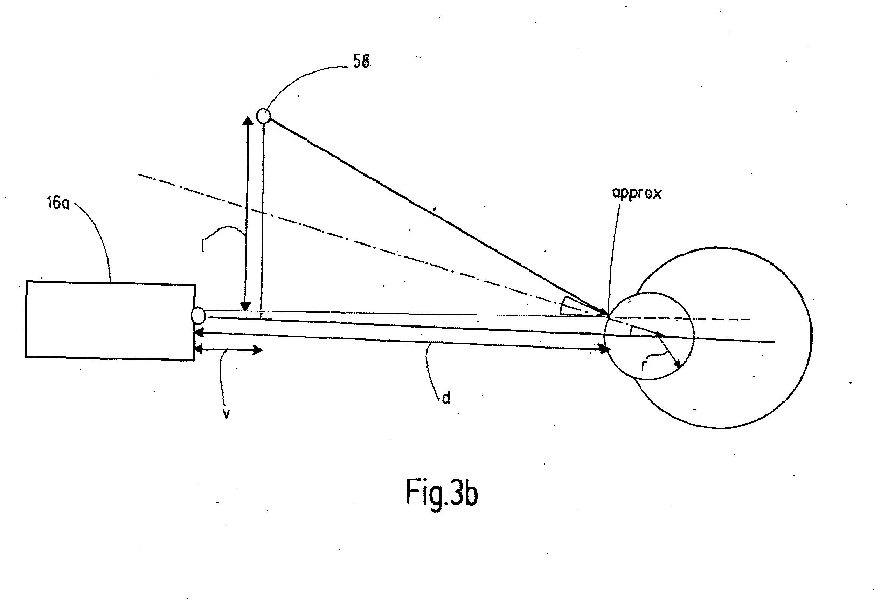

Bei der reflexbasierten Bestimmung der Position des Hornhautscheitels gemäß Figur 3a, 3b sind zwei Korrekturrechnungen vorzunehmen, wobei die erste Korrekturrechnung (Figur 3a) eine Korrektur in x-Richtung, die zweite Korrektur (Figur 3b) eine Korrektur in y-Richtung betrifft. Diese Raumrichtungen werden durch ein inneres Koordinatensystem der Frontkamera 16a festgelegt, das seinen Nullpunkt im optischen Zentrum der Frontkamera 16a hat. Die z-Richtung wird dabei durch die Aufnahmerichtung der Frontkamera 16a festgelegt, die x-Richtung ist eine Richtung, die horizontal sowie orthogonal zur z-Richtung verläuft und in deren Richtung betrachtet nach rechts weist, und die y-Richtung verläuft orthogonal zur x-Richtung und zur z-Richtung und weist im Raum nach oben. Bei der reflexbasierten Messung wird mittels einer Lichtquelle, im vorliegenden Fall einer LED 58 ein Lichtblitz ausgesandt, dessen Reflexion auf der Hornhaut von der Frontkamera 16a und mindestens einer der Seitenkameras 16b detektiert wird und die erste Näherung für die Position des Hornhautscheitels im Raum bildet. Der Reflexpunkt wird in Figur 3a, 3b mit "approx" bezeichnet. In x-Richtung wird eine Korrektur durch Addition von Δx =+/ -r * sin (½ * (arccos z/a + arctan x/(z-v))) zur x-Koordinate des Reflexpunkts approx vorgenommen, wobei das Pluszeichen bei der Anwendung auf das linke Auge, das Minuszeichen bei der Anwendung auf das rechte Auge (vgl. Figur 3a) zu verwenden ist. r ist dabei ein Erfahrungswert für den Hornhautradius, der typischerweise ca. 8mm beträgt. a ist der Abstand des optischen Zentrums der Frontkamera 16a zum Reflexpunkt approx und v ist der Abstand der LED 58 zum optischen Zentrum der Frontkamera 16a in z-Richtung. x und z wiederum sind die Koordinaten in x- und z-Richtung.

In y-Richtung wird ausgehend vom Reflexpunkt approx eine Korrektur mittels Addition von Δy =+/ -r * sin ½ * (arctan I/(d-v)) vorgenommen. r ist wiederum der Erfahrungswert für den Hornhautradius, d ist der Abstand des optischen Zentrums der Frontkamera 16a zum Reflexpunkt approx in z-Richtung, v ist der Abstand der LED 58 zum optischen Zentrum der Frontkamera 16a in z-Richtung und I ist der Abstand der LED 58 vom optischen Zentrum der Frontkamera 16a in y-Richtung. Das Pluszeichen kommt zur Anwendung, wenn die LED 58 unter der Frontkamera 16a angeordnet ist, also ihre y-Koordinate kleiner ist als die y-Koordinate der Frontkamera 16a bzw. ihres optischen Zentrums. Ist die LED über der Frontkamera 16a angeordnet, so kommt das Minuszeichen zum Einsatz.

Bei den beschriebenen Verfahren kann die Pupille bzw. der Reflexpunkt approx beispielsweise mittels Merkmalsextraktion, mittels Merkmalsmatching und/oder mittels maschinellem Lernen durch Vergleich mit einer Vielzahl vorbekannter Daten detektiert werden. Diesem Detektionsschritt kann ein Schritt vorangehen, bei dem ein Gesichtsdetektor erkennt, welche Bildpunkte zum Gesicht des Probanden bzw. zu seiner Augenpartie gehören, so dass nach der Pupille bzw. dem Reflexpunkt approx bereits eingegrenzt gesucht werden kann.

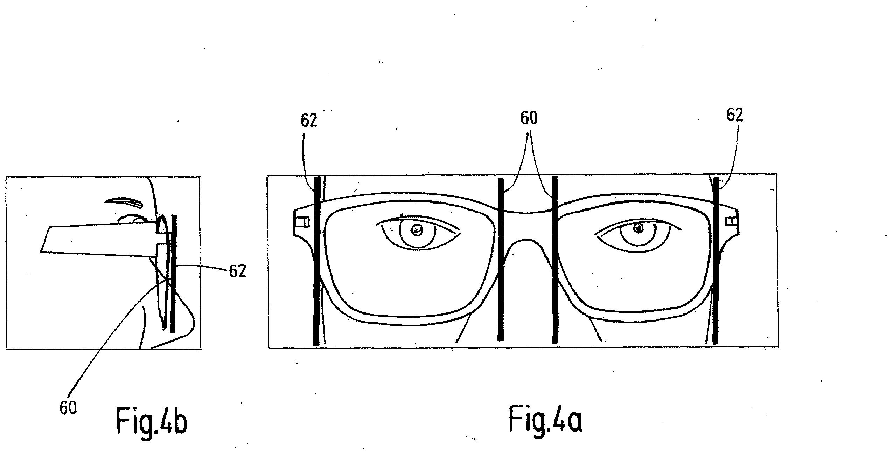

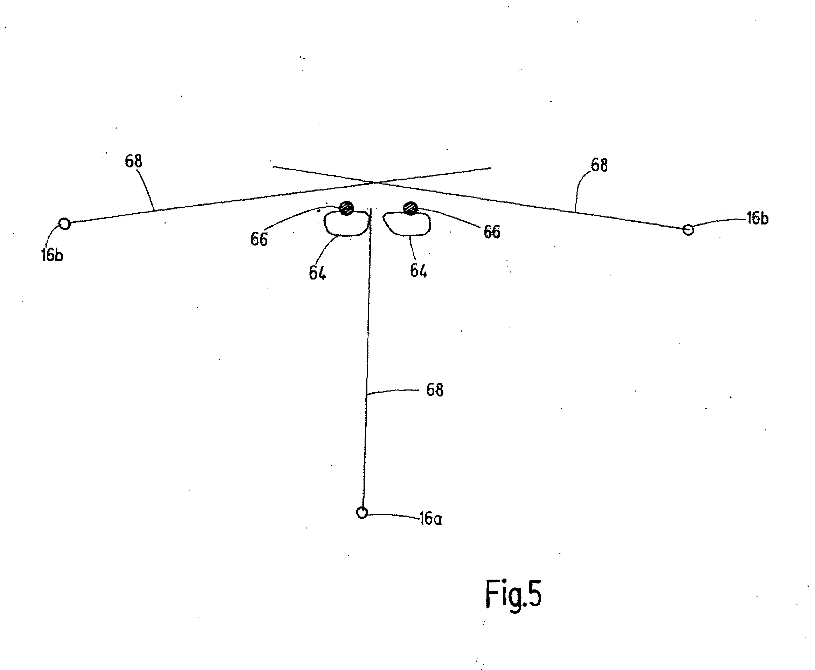

Die Position des Hornhautscheitels im Raum wird zur Bestimmung der Zentrierparameter bei der Brillenanpassung verwendet. Mittels der von den Kameras 16a, 16b aufgenommenen kalibrierten Bilder werden durch geometrische Positionsbestimmung, insbesondere durch Triangulation oder Epipolargeometrie, geometrische Parameter ermittelt, die die Geometrie der Brillenfassung beschreiben. Diese umfassen die nasalen und temporalen Fassungsränder 60, 62, wie in Figur 4a, 4b beispielhaft angedeutet. An die die nasalen und temporalen Fassungsränder 60, 62 beschreibenden Parameter werden Ebenen 64 als Näherung für die Flächen der in der Brillenfassung aufzunehmenden Brillengläser angepasst. Figur 5 zeigt schematisch die ebenen 64 vor der jeweiligen, näherungsweise dargestellten Hornhaut 66 mit schematisch dargestellten Sichtstrahlen 68 der Kameras 16a, 16b. Zu guter Letzt werden aus den gewonnenen Daten die Zentrierparameter berechnet.

## Patentansprüche

1. Computerimplementiertes Verfahren zur Bestimmung von Zentrierparametern zur Anpassung von Brillengläsern an eine vorgegebene Brillenfassung und an den Kopf eines Probanden, wobei mindestens zwei aus unterschiedlichen Aufnahmerichtungen aufgenommene zueinander kalibrierte Bilder des die Brillenfassung tragenden Kopfes bereitgestellt werden, wobei aus den Bildern mittels geometrischer Positionsbestimmung geometrische Parameter ermittelt werden, die die Position der Augen und die Geometrie der Brillenfassung beschreiben, wobei an die die Geometrie der Brillenfassung beschreibenden geometrischen Parameter ein dreidimensionales Modell für die in der Brillenfassung aufzunehmenden Brillengläser angepasst wird, wobei aus den die Position der Augen und die Geometrie der Brillenfassung beschreibenden geometrischen Parametern Zentrierparameter berechnet werden und wobei an die die Geometrie der Brillenfassung beschreibenden Parameter Ebenen als Näherung für die Flächen der in der Brillenfassung aufzunehmenden Brillengläser oder des die Brillengläser aufnehmenden Brillenfassungsrands angepasst werden, **dadurch gekennzeichnet, dass** die die Position der Augen beschreibenden geometrischen Parameter die Position des Hornhautscheitels im Raum umfassen, dass die Position des Hornhautscheitels einer Korrekturrechnung unterzogen wird, dass die Position des Hornhautscheitels im Raum in einer ersten Näherung als Schnittpunkt q eines die Hornhaut (50) tangierenden ersten Sichtstrahls (52) einer das Seitenbild aufnehmenden Seitenkamera (16b) mit einem auf die Pupille (54) gerichteten zweiten Sichtstrahl (56) einer das Frontbild aufnehmenden Frontkamera (16a) bestimmt wird und dass mittels der Korrekturrechnung die Position des Hornhautscheitels gemäß a = q + µ * v + µ * w berechnet wird, wobei a der Positionsvektor des Hornhautscheitels im Raum nach Durchführung der Korrekturrechnung, q die Position des Hornhautscheitels in erster Näherung, µ ein Erfahrungswert oder ein tatsächlicher Wert für den Abstand zwischen dem Pupillenzentrum und dem Hornhautscheitel, v ein Einheitsvektor der Raumrichtung vom Pupillenzentrum zur Frontkamera und w ein Einheitsvektor der durch das Zentrum der Hornhautkugel verlaufenden Aufnahmerichtung ist.

2. Computerimplementiertes Verfahren nach Anspruch 1, **dadurch gekennzeichnet, dass** mindestens zwei gleichzeitig aus unterschiedlichen Aufnahmerichtungen aufgenommene zueinander kalibrierte Bilder des die Brillenfassung tragenden Kopfes bereitgestellt werden.

3. Computerimplementiertes Verfahren nach Anspruch 1 oder 2, **dadurch gekennzeichnet, dass** die die Geometrie der Brillenfassung beschreibenden geometrischen Parameter die nasalen und/oder temporalen Fassungsränder beschreibende Parameter umfassen und dass das dreidimensionale Modell an die die nasalen und/oder temporalen Fassungsränder beschreibenden Parameter angepasst wird.

4. Computerimplementiertes Verfahren nach einem der Ansprüche 1 bis 3, **dadurch gekennzeichnet, dass** die die Geometrie der Brillenfassung beschreibenden Parameter mittels Epipolargeometrie und/oder mittels Triangulation ermittelt werden.

5. Computerimplementiertes Verfahren nach einem der vorangehenden Ansprüche, **dadurch gekennzeichnet, dass** mindestens drei gleichzeitig aus unterschiedlichen Aufnahmerichtungen aufgenommene zueinander kalibrierte Bilder des Kopfes bereitgestellt werden, wobei ein Frontbild den Kopf von vorne abbildet und jeweils ein Seitenbild den Kopf von links und von rechts abbildet.

6. Computerimplementiertes Verfahren nach Anspruch 5, **dadurch gekennzeichnet, dass** die Aufnahmerichtungen der Seitenbilder mit der Aufnahmerichtung des Frontbilds jeweils einen Winkel von mindestens 60 Grad einschließen.

7. Computerprogramm mit Programmcode zur Durchführung aller Verfahrensschritte nach einem der Ansprüche 1 bis 6, wenn das Computerprogramm in einem Computer geladen und in einem Computer ausgeführt wird.

8. Verwendung einer Vorrichtung (10) zur Durchführung eines computerimplementierten Verfahrens nach einem der Ansprüche 1 bis 6, wobei die Vorrichtung (10) einen Kameraträger (14) aufweist, welcher einen nach oben, nach unten und zu einer Rückseite (30) hin offenen Innenraum (22) teilweise umschließt und mindestens drei Kameras (16a, 16b) trägt, die zwischen zwei freien Enden (18) des Kameraträgers (14) angeordnet und auf den Innenraum (22) gerichtet sind, wobei der Kameraträger (14) zur Beleuchtung des Innenraums (22) eine Beleuchtungseinrichtung (32, 34, 36) aufweist.

## Claims

1. Computer-implemented method for determining centring parameters for fitting spectacle lenses to a predetermined spectacle frame and to the head of a test subject, wherein at least two calibrated images, which are recorded from different recording directions in relation to one another, of the head wearing the spectacle frame are provided, wherein geometric parameters, which describe the position of the eyes and the geometry of the spectacle frame, are ascertained from the images by means of geometric position determination, wherein a three-dimensional model for the spectacle lenses to be accommodated in the spectacle frame is fitted to the geometric parameters describing the geometry of the spectacle frame, wherein centring parameters are calculated from the geometric parameters describing the position of the eyes and the geometry of the spectacle frame, and wherein planes are fitted to the parameters describing the geometry of the spectacle frame as an approximation for the surfaces of the spectacle lenses to be accommodated in the spectacle frame or the spectacle frame edge accommodating the spectacle lenses, **characterized in that** the geometric parameters describing the position of the eyes comprise the position of the corneal vertex in space, the position of the corneal vertex is subjected to a correction calculation, the position of the corneal vertex in space is determined in a first approximation as the intersection q of a first line of sight (52), which is tangent to the cornea (50), of a side camera (16b) recording the side image with a second line of sight (56), directed onto the pupil (54), a front camera (16a) recording the front image, and the position of the corneal vertex is calculated by means of the correction calculation according to a = q + µ * v + µ * w, wherein a is the position vector of the corneal vertex and space after carrying out the correction calculation, q is the position of the corneal vertex in a first approximation, µ is an experiential value or an actual value for the distance between the pupil centre and the corneal vertex, v is a unit vector of the spatial direction from the pupil centre to the front camera, and w is a unit vector of the recording direction extending through the centre of the corneal sphere.

2. Computer-implemented method according to Claim 1, **characterized in that** at least two images of the head wearing the spectacle frame, which are calibrated in relation to one another and are recorded simultaneously from different recording directions, are provided.

3. Computer-implemented method according to Claim 1 or 2, **characterized in that** the geometric parameters describing the geometry of the spectacle frame comprised parameters describing the nasal and/or temporal frame edges, and the three-dimensional model is fitted to the parameters describing the nasal and/or temporal frame edges.

4. Computer-implemented method according to any one of Claims 1 to 3, **characterized in that** the parameters describing the geometry of the spectacle frame are ascertained by means of epipolar geometry and/or by means of triangulation.

5. Computer-implemented method according to any one of the preceding claims, **characterized in that** at least three images of the head, which are recorded simultaneously from different recording directions and are calibrated in relation to one another, are provided, wherein a front image depicts the head from the front and one side image depicts the head from the left and from the right in each case.

6. Computer-implemented method according to Claim 5, **characterized in that** the recording directions of the side images each enclosed an angle of at least 60° with the recording direction of the front image.

7. Computer program having program code for carrying out all method steps according to any one of Claims 1 to 6 when the computer program is loaded in a computer and executed in a computer.

8. Use of a device (10) for carrying out a computer-implemented method according to any one of Claims 1 to 6, wherein the device (10) has a camera carrier (14), which partially encloses an interior (22) open on top, on the bottom, and toward a rear side (30) and carries at least three cameras (16a, 16b), which are arranged between two free ends (18) of the camera carrier (14) and are directed toward the interior (22), wherein the camera carrier (14) comprises a lighting unit (32, 34, 36) for illuminating the interior (22).

## Revendications

1. Procédé mis en œuvre par ordinateur destiné à déterminer des paramètres de centrage pour l'ajustement de verres de lunettes à une monture de lunettes prédéfinie et à la tête d'un sujet, au moins deux images étalonnées les unes par rapport aux autres et capturées à partir de directions de capture différentes de la tête portant la monture de lunettes étant fournies, des paramètres géométriques décrivant la position des yeux et la géométrie de la monture de lunettes étant déterminés à partir des images au moyen d'une détermination de position géométrique, un modèle tridimensionnel des verres de lunettes devant être reçus dans la monture de lunettes étant ajusté sur les paramètres géométriques décrivant la géométrie de la monture de lunettes, des paramètres de centrage étant calculés à partir des paramètres géométriques décrivant la position des yeux et la géométrie de la monture de lunettes et des plans étant ajustés sur les paramètres décrivant la géométrie de la monture de lunettes comme approximation pour les surfaces des verres de lunettes devant être reçus dans la monture de lunettes ou du bord de monture de lunettes recevant les verres de lunettes, **caractérisé en ce que** les paramètres géométriques décrivant la position dans l'espace des yeux comprennent la position de l'apex cornéen, **en ce que** la position de l'apex cornéen est soumise à un calcul de correction, **en ce que** la position de l'apex cornéen dans l'espace est déterminée dans une première approximation comme étant le point d'intersection q d'un premier rayon de vision (52) tangent à la cornée (50) d'une caméra latérale (16b) capturant l'image latérale avec un deuxième rayon de vision (56) dirigé vers la pupille (54) d'une caméra frontale (16a) capturant l'image frontale et **en ce que** la position de l'apex cornéen est calculée au moyen d'un calcul de correction tel que a = q + µ * v + µ * w, où a est le vecteur de position de l'apex cornéen dans l'espace après réalisation du calcul de correction, q est la position de l'apex cornéen dans la première approximation, µ est une valeur empirique ou une valeur réelle de l'écart entre le centre pupillaire et l'apex cornéen, v est un vecteur unitaire de la direction spatiale du centre pupillaire vers la caméra frontale et w est un vecteur unitaire de la direction de capture passant par le centre de la sphère cornéenne.

2. Procédé mis en œuvre par ordinateur selon la revendication 1, **caractérisé en ce qu'**au moins deux images étalonnées les unes par rapport aux autres et capturées simultanément à partir de directions de capture différentes de la tête portant la monture de lunettes sont fournies.

3. Procédé mis en œuvre par ordinateur selon la revendication 1 ou 2, **caractérisé en ce que** les paramètres géométriques décrivant la géométrie de la monture de lunettes comprennent des paramètres décrivant les bords de monture nasaux et/ou temporaux et **en ce que** le modèle tridimensionnel est ajusté sur les paramètres décrivant les bords de monture nasaux et/ou temporaux.

4. Procédé mis en œuvre par ordinateur selon l'une des revendications 1 à 3, **caractérisé en ce que** les paramètres décrivant la géométrie de la monture de lunettes sont déterminés au moyen d'une géométrie épipolaire et/ou au moyen d'une triangulation.

5. Procédé mis en œuvre par ordinateur selon l'une des revendications précédentes, **caractérisé en ce qu'**au moins trois images étalonnées les unes par rapport aux autres et capturées simultanément à partir de directions de capture différentes de la tête sont fournies, une image frontale représentant la tête de face et une image latérale représentant respectivement la tête vue de gauche et de droite.

6. Procédé mis en œuvre par ordinateur selon la revendication 5, **caractérisé en ce que** les directions de capture des images latérales forment respectivement avec la direction de capture de l'image frontale un angle d'au moins 60 degrés.

7. Programme informatique comprenant un code de programme pour exécuter toutes les étapes de procédé selon l'une des revendications 1 à 6, lorsque le programme informatique est chargé dans un ordinateur et/ou exécuté dans un ordinateur.

8. Utilisation d'un dispositif (10) destiné à exécuter un procédé mis en œuvre par ordinateur selon l'une des revendications 1 à 6, le dispositif (10) comportant un support de caméra (14) qui entoure partiellement un espace intérieur (22) ouvert vers le haut, vers le bas et vers un côté arrière (30) et porte au moins trois caméras (16a, 16b) qui sont agencées entre deux extrémités libres (18) du support de caméra (14) et sont dirigées vers l'espace intérieur (22), le support de caméra (14) comportant un dispositif d'éclairage (32, 34, 36) destiné éclairer l'espace intérieur (22).
